(19) Europäisches Patentamt
European Patent Office
Office européen des brevets

(11) **EP 2 869 460 A1**

(12) **EUROPEAN PATENT APPLICATION**
published in accordance with Art. 153(4) EPC

(43) Date of publication:
**06.05.2015 Bulletin 2015/19**

(51) Int Cl.:
**H02P 21/00** (2006.01)  **H02P 27/04** (2006.01)

(21) Application number: **13810533.3**

(22) Date of filing: **06.06.2013**

(86) International application number:
**PCT/JP2013/065663**

(87) International publication number:
**WO 2014/002724 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.06.2012 JP 2012143996**

(71) Applicant: **Toyota Shatai Kabushiki Kaisya Kariya-shi, Aichi 448-8666 (JP)**

(72) Inventors:
• **UNO, Kousuke**
  **Aichi 4488666 (JP)**
• **SUGAI, Masaru**
  **Aichi 4801192 (JP)**

(74) Representative: **Appleyard Lees**
  **15 Clare Road**
  **Halifax HX1 2HY (GB)**

(54) **MOTOR CONTROL DEVICE**

(57)    An electronic control device (10) includes a map that defines the relationship of a battery voltage (Vb), a motor rotation speed ($\omega e$), and a torque value (T) of a motor (1) with each of the d-axis current command value (Id*) and q-axis current command value (Iq*). During regeneration of the motor (1), a d-axis current command value (IdTref*) based on a torque command value (T*) and a d-axis current command value (IdTout*) based on an output torque (Tout) of the motor (1) are respectively derived with reference to the map. When the d-axis current command value (IdTout*) is greater on the negative side than the d-axis current command value (IdTref*), an inverter (2) is controlled according to the d-axis current command value (IdTout*).

Fig.1

EP 2 869 460 A1

## Description

TECHNICAL FIELD

The present invention relates to a control device for an AC motor.

BACKGROUND ART

Patent Document 1 describes a conventional AC motor control device. In such a control device, driving of the AC motor is controlled by controlling an inverter that converts direct current to alternating current. The AC motor described in Patent Document 1 is driven by power from an AC power supply.

For example, an AC motor for drive wheels of an electric vehicle is driven by power from a battery. In this case, the motor rotation speed ωe and the battery voltage Vb always fluctuate. Therefore, a d-axis current command value Id* and a q-axis current command value Iq* to efficiently output a torque corresponding to a torque command value T* to the motor vary depending on the motor rotation speed ωe, the battery voltage Vb, and the torque command value T*.

Therefore, three-dimensional maps that define the relationship of the motor rotation speed ωe, the battery voltage Vb, and the torque command value T* with each current command value Id*, Iq* are referenced. Respective appropriate current command values Id* and Iq* are thereby derived every time based on the motor rotation speed ωe, the battery voltage Vb, and the torque command value T*. Then, the inverter is controlled such that current of a value corresponding to the derived current command values Id* and Iq* flows to the motor.

Also, a d-axis current Id and a q-axis current Iq that actually flow to the motor are detected. Along therewith, a signal to control the inverter is feedback-controlled based on the degree of discrepancy between the actual current value Id, Iq and each current command value Id*, Iq*.

For example, in the case of an electric vehicle provided with drive wheels that are driven by an AC motor, the torque of the motor and/or the rotation direction of the drive wheels that is controlled during high-speed traveling sometimes suddenly changes. In this case, an external load acting on the output shaft of the motor also suddenly changes. At this time, the motor reaches a regenerative state of being driven by the drive wheels, and an excessively large regenerative current possibly flows from the motor to the inverter.

To cope with such a problem, in the art described in Patent Document 1, when the motor reaches a regenerative state, a d-axis current command value is set based on an output torque such that no regenerative torque is generated. Here, the d-axis current is always a negative value, and the larger the d-axis current is on the negative side, the larger a reluctance torque is, and the smaller the generated voltage (induced voltage) of the motor is. However, in this case, regenerative energy cannot be recovered because of control that is always performed when the motor has reached a regenerative state such that no regenerative torque of the motor is generated.

Prior Art Documents

Patent Documents

Patent Document 1: Japanese Laid-Open Patent Publication No. 2001-95300.

SUMMARY OF THE INVENTION

PROBLEMS THAT THE INVENTION IS TO SOLVE

It is an object of the present invention to provide a motor control device capable of recovering regenerative energy while suppressing an excessively large regenerative current from flowing from the motor to the inverter.

MEANS FOR SOLVING THE PROBLEM

To solve the above-described problem, according to a first aspect of the present invention, provided is a motor control device which derives a d-axis current command value and q-axis current command value based on a torque command value, and controls an inverter such that current of a value corresponding to the d-axis current command value and q-axis current command value flows to a motor. When an absolute value of an output torque of the motor is greater than an absolute value of the torque command value during regeneration of the motor, the control device sets a value greater on a negative side than the d-axis current command value based on the torque command value as a d-axis current command value, and controls the inverter according to the set d-axis current command value.

There is a case where the absolute value of an output torque of the motor becomes greater than the absolute value of a torque command value during regeneration of the motor due to a sudden change in external load. In this case, according to the above-described arrangement, if conditions such as the motor rotation speed and battery voltage are the same, the inverter is controlled according to the d-axis current command value greater on the negative side than the d-axis current command value based on the torque command value. Here, the d-axis current is always a negative value. Therefore, the larger the d-axis current is on the negative side, the larger a reluctance torque is, and the smaller the generated voltage (induced voltage) of the motor is. Therefore, an excessive rise in regenerative voltage of the motor is suppressed.

On the other hand, when the absolute value of an output torque of the motor is not more than the absolute value of a torque command value even during regeneration of the motor, it is determined that there is no possible excessive rise in regenerative voltage of the motor, and the inverter is controlled according to the d-axis current command value based on the torque command value. Therefore, a regenerative current of an appropriate value flows from the motor to the inverter. Accordingly, regenerative energy can be appropriately recovered, while flow of an excessively large regenerative current from the motor to the inverter can be suppressed.

In the motor control device described above, it is preferable, when a d-axis current command value based on an output torque of the motor is greater on a negative side than the d-axis current command value based on the torque command value during regeneration of the motor, to control the inverter according to the d-axis current command value based on the output torque of the motor.

According to this arrangement, a d-axis current command value to control the inverter can be appropriately set based on a comparison of d-axis current command values.

In the motor control device described above, it is preferable to include a map that defines a relationship of a battery voltage, a motor rotation speed, and a torque value of the motor with a d-axis current command value, and to derive the d-axis current command value based on the torque command value with reference to the map, and during regeneration of the motor, respectively derive the d-axis current command value based on the torque command value and the d-axis current command value based on the output torque of the motor with reference to the map.

In the motor control device described above, it is preferable to determine whether the motor is in a regenerative state based on an actual q-axis current value and a motor rotation speed.

When the motor is in a regenerative state, there are two cases where the motor is rotating in the forward direction and the output torque is negative and where the motor is rotating in the reverse direction and the output torque is positive. The motor rotation speed has a correlation with the rotation direction of the motor, and the actual q-axis current value has a correlation with the output torque of the motor. Therefore, the control device can accurately determine whether the motor is in a regenerative state based on the actual q-axis current value and the motor rotation speed.

BRIEF DESCRIPTION OF DRAWINGS

Fig. 1 is a schematic configuration diagram of a motor control device according to an embodiment of the present invention.
Fig. 2 is a graph showing a relationship of the motor rotation speed and q-axis current with the motor operating states.
Fig. 3(a) is a map for deriving a d-axis current command value.
Fig. 3(b) is a map for deriving a q-axis current command value.
Fig. 4 is a flowchart showing processing to set a d-axis current command value.
Fig. 5 is a graph showing a relationship of the voltage of an inverter with the voltage of a motor at the time of regeneration of the motor.
Fig. 6 is a timing chart showing transitions of a d-axis current command value and an actual d-axis current value when conventional motor control is carried out.
Fig. 7 is a timing chart showing transitions of a d-axis current command value and an actual d-axis current value when motor control according to the present invention is carried out.

MODE FOR CARRYING OUT THE INVENTION

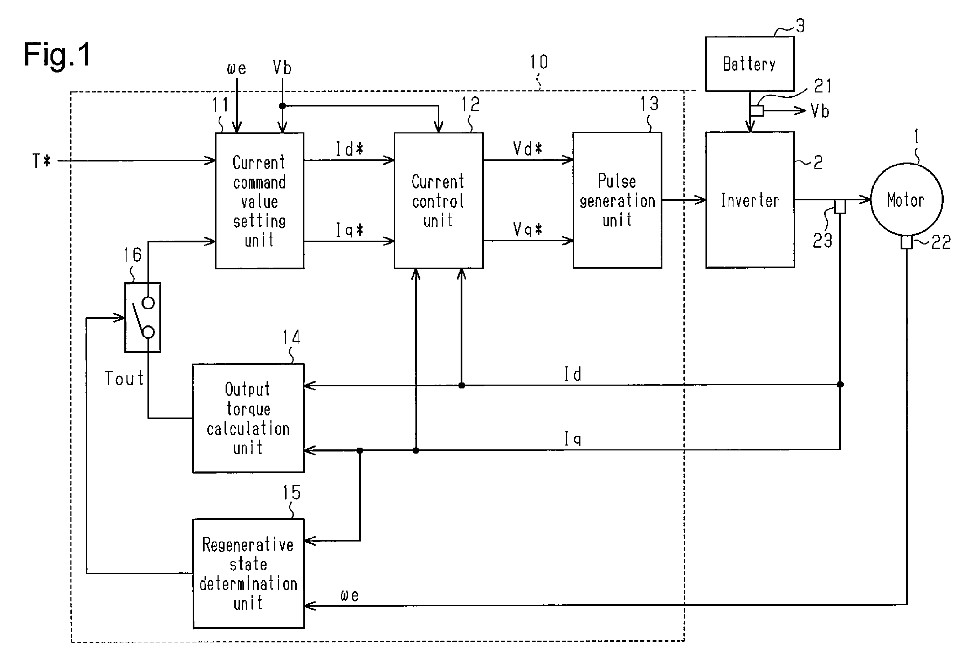

Hereinafter, an embodiment of a motor control device according to the present invention will be described with reference to Fig. 1 to Fig. 7. In the present embodiment, the control device is embodied into a control device for an AC motor that drives drive wheels of an electric vehicle, and for the AC motor, a permanent magnet synchronous motor (hereinafter, simply referred to as a motor 1) is adopted.

As shown in Fig. 1, DC power from a battery 3 is converted to AC power of a variable voltage and variable frequency by an inverter 2. Then, the AC power output from the inverter 2 drives the motor 1 at an arbitrary rotation speed (motor rotation speed $\omega e$). The motor 1 has an output shaft coupled to the drive wheels of the vehicle. When the output shaft of the motor 1 rotates, the drive wheels of the vehicle also rotate.

The motor 1 is controlled by an electronic control device 10. The electronic control device 10 controls the inverter 2 based on a battery voltage Vb, a motor rotation speed $\omega e$, and a torque command value T* to control current (d-axis current Id, q-axis current Iq) that flows to the motor 1.

The electronic control device 10 includes a current command value setting unit 11, a current control unit 12, a pulse generation unit 13, an output torque calculation unit 14, a regenerative state determination unit 15, and a switch 16. To the electronic control device 10, a battery voltage Vb, a motor rotation speed $\omega e$, a d-axis current Id, and a q-axis current Iq are input. In the electronic vehicle, a voltage sensor 21 that detects the battery voltage Vb, a resolver 22 that detects the motor rotation speed $\omega e$, and a current sensor 23 that detects the d-axis current Id and q-axis current Iq are provided. The d-axis current is a component in a magnetic field direction of the motor 1 of a primary current that flows to the motor 1. The q-axis current is a component in a direction orthogonal to the magnetic field direction of the motor 1 of the primary current.

To the output torque calculation unit 14, respective actual values of the d-axis current Id and q-axis current Iq are input. The output torque calculation unit 14, based on the respective actual values of the d-axis current Id and q-axis current Iq, calculates an output torque Tout of the motor 1 according to the following formula (1).

$$Tout = p \times \{\phi + (Ld - Lq) \times Id\} \times Iq \ ... \ (1)$$

Here, p denotes the number of pole pairs of the motor 1, $\phi$ denotes the number of flux linkages, Ld denotes a d-axis inductance, and Lq denotes a q-axis inductance.

To the regenerative state determination unit 15, the actual q-axis current value Iq and the motor rotation speed $\omega$e are input. The regenerative state determination unit 15 determines whether the motor 1 is in a regenerative state based on the actual q-axis current value Iq and the motor rotation speed $\omega$e.

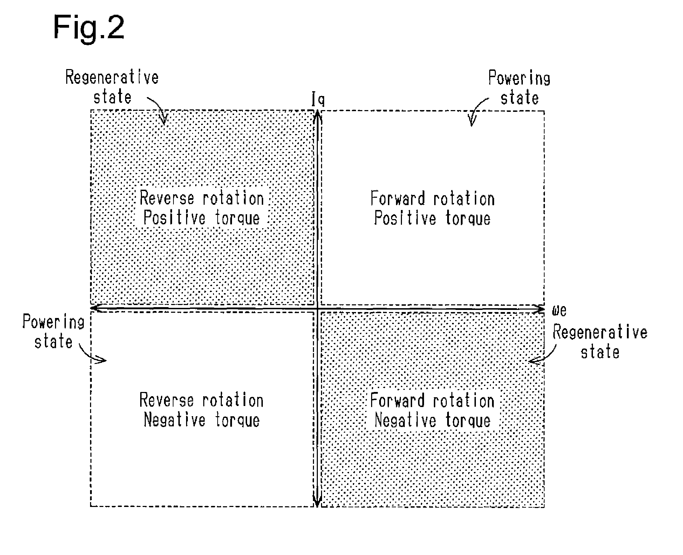

As shown in Fig. 2, when the motor 1 is in a powering state, there are two cases where the motor 1 rotates in a forward direction and the output torque Tout is positive ($\omega$e>0, Tout>0) and where the motor 1 rotates in a reverse direction and the output torque Tout is negative ($\omega$e<0, Tout<0). When the motor 1 is in a regenerative state, there are two cases where the motor 1 is rotating in the forward direction but the output torque Tout is negative ($\omega$e>0, Tout<0) and where the motor 1 is rotating in the reverse direction but the output torque Tout is positive ($\omega$e<0, Tout>0). It is determined from these relationships that the motor 1 is in a regenerative state when the following inequality (2) holds.

$$Id \times \omega e < 0 \ ... \ (2)$$

When it is determined by the regenerative state determination unit 15 that the motor 1 is in a regenerative state, the switch 16 is turned on. Therefore, the output torque Tout of the motor 1 calculated by the output torque calculation unit 14 is output to the current command value setting unit 11.

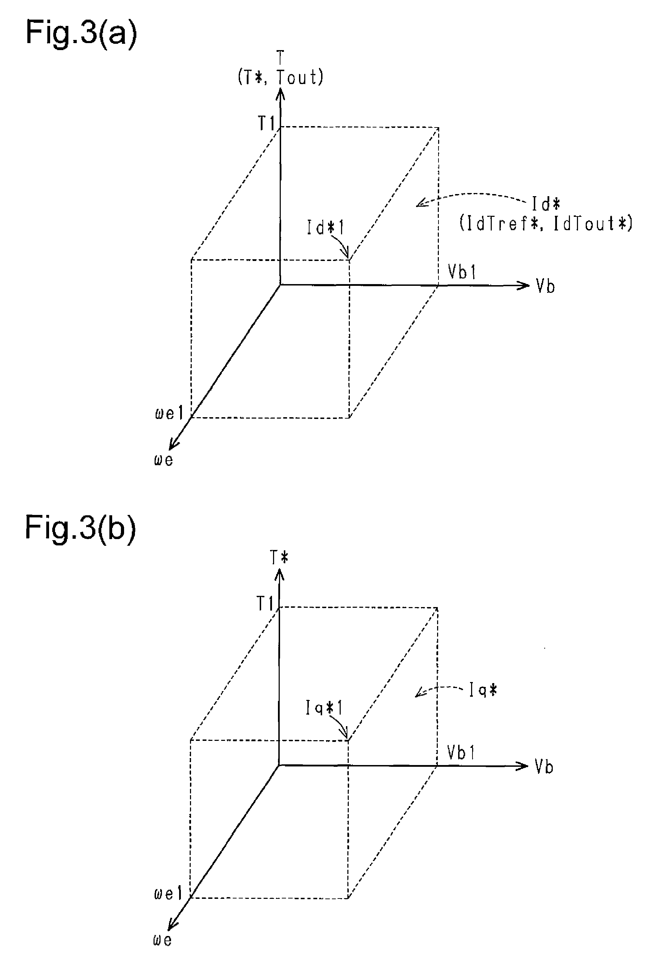

To the current command value setting unit 11, the battery voltage Vb, the motor rotation speed $\omega$e, and the torque command value T* are always input. When the switch 16 is on (during regeneration of the motor 1), the output torque Tout is further input to the current command value setting unit 11. As shown in Fig. 3(a), the current command value setting unit 11 is provided with a map that defines the relationship of the battery voltage Vb, the motor rotation speed $\omega$e, and the torque value T (torque command value T*, output torque Tout) of the motor 1 with a d-axis current command value Id*. The current command value setting unit 11, with reference to the map based on the battery voltage Vb, the motor rotation speed $\omega$e, and the torque value T (torque command value T*, output torque Tout) of the motor 1, derives a d-axis current command value Id*. That is, the current command value setting unit 11 always derives a d-axis current command value IdTref* based on the torque command value T* (Tref*), and during regeneration of the motor 1, further derives a d-axis current command value IdTout* based on the output torque Tout of the motor 1.

Also, as shown in Fig. 3(b), the current command value setting unit 11 is provided with a map that defines the relationship of the battery voltage Vb, the motor rotation speed $\omega$e, and the torque command value T* with a q-axis current command value Iq*. The current command value setting unit 11, with reference to the map based on the battery voltage Vb, the motor rotation speed $\omega$e, and the torque command value T*, derives a q-axis current command value Iq*. The d-axis current command value Id* and the q-axis current command value Iq* thus derived are output from the current command value setting unit 11 to the current control unit 12.

When the motor 1 is powering, the value IdTref* derived based on the torque command value T* is output as a d-axis current command value Id* from the current command value setting unit 11 to the current control unit 12. On the other hand, during regeneration of the motor 1, a comparison of the d-axis current command value IdTout* derived based on the output torque Tout of the motor 1 and the d-axis current command value IdTref* derived based on the torque command value T* is performed. Then, of both values, a d-axis current command value greater on the negative side is output from the current command value setting unit 11 to the current control unit 12. An actual d-axis current value Id and its command values IdTref* and IdTout* are always negative values. The d-axis current Id is called a "field weakening current." As is apparent also from the following formula (3) into which the above (1) has been deformed, the larger the d-axis current Id, the larger a reluctance torque (= $p \times (Ld-Lq) \times Iq \times Id$) is, and the smaller the generated voltage (induced voltage) of the motor 1 is.

$$Tout = p \times \phi \times Id + p \times (Ld-Lq) \times Iq \times Id \ ... \ (3)$$

To the current control unit 12, the respective current command values Id* and Iq*, the battery voltage Vb, the actual d-axis current value Id, and the actual q-axis current value Iq are input. The current control unit 12, based on the respective current command values Id* and Iq*, the battery voltage Vb, and the respective actual current values Id and Iq, derives a d-axis DC voltage command value Vd* and a q-axis DC voltage command value Vq* to make the respective actual values Id and Iq of the d-axis current and q-axis current be values corresponding to the respective current command values Id* and Iq*. That is, the respective DC voltage command values Vd* and Vq* are feedback-controlled based on the degree of discrepancy between the current Id, Iq that actually flows in the motor 1 and each current command value Id*, Iq*.

To the pulse generation unit 13, the d-axis DC voltage command value Vd* and the q-axis DC voltage command value Vq* are input. The pulse generation unit 13, based on the respective DC voltage command values Vd* and Vq*, generates a pulse signal to drive the inverter 2. As a result of the pulse signal being output from the pulse generation unit 13 to the inverter 2, driving of the motor 1 is controlled.

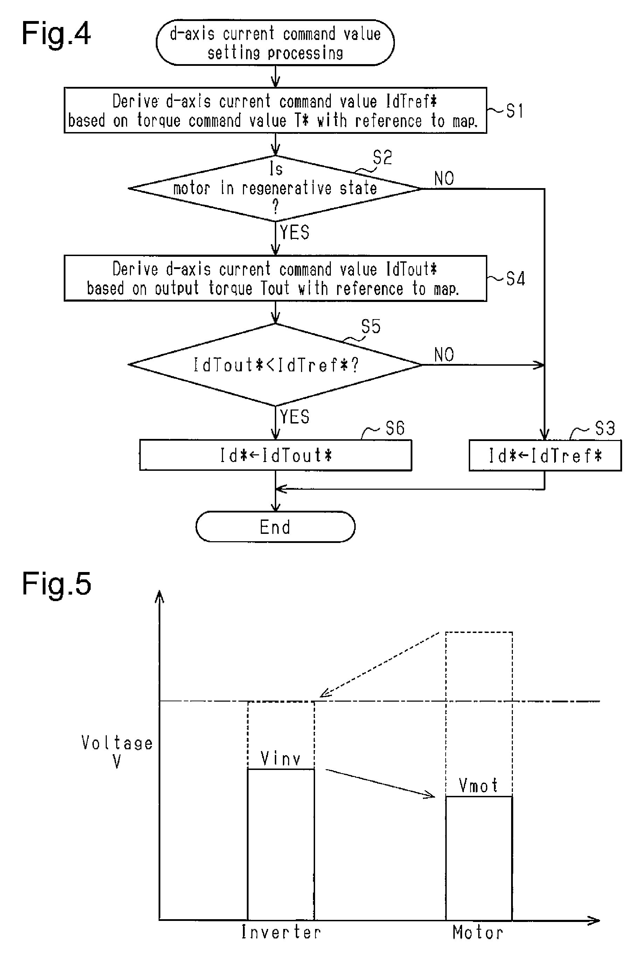

Next, a processing to set a d-axis current command value Id* will be described with reference to Fig. 4. The series of processing shown in Fig. 4 is repeatedly carried out every predetermined period (for example, a few milliseconds) by the electronic control device 10.

As shown in Fig. 4, in this series of processing, the electronic control device 10, first, in step S1, refers to the map shown in Fig. 3(a). Then, the electronic control device 10 derives a d-axis current command value IdTref* based on the torque command value T*. Next, the program proceeds to step S2, in which the electronic control device 10 determines whether the motor 1 is in a regenerative state based on the above inequity (2).

When it has been determined that the motor 1 is not in a regenerative state (step S2: "NO"), the electronic control device 10 determines that the motor 1 is in a powering state. Then, the program proceeds to step S3, in which the electronic control device 10 sets the d-axis current command value IdTref* for the d-axis current command value Id* that is output to the current control unit 12. The series of processing thus once ends.

On the other hand, when it has been determined that the motor 1 is in a regenerative state (step S2: "YES"), the program proceeds to step S4, in which the electronic control device 10 refers to the map shown in Fig. 3(a). Then, the electronic control device 10 derives a d-axis current command value IdTout* based on the output torque Tout of the motor 1. Next, the program proceeds to step S5, in which the electronic control device 10 determines whether the d-axis current command value IdTout* is smaller than IdTref*, that is, whether greater on the negative side. When it has been determined to be NO in step S5, the program proceeds to step S3 to set a d-axis current command value IdTref* for the d-axis current command value Id* that is output to the current control unit 12. The series of processing thus once ends.

On the other hand, when it has been determined that the d-axis current command value IdTout* is smaller than IdTref* (step S5: "YES"), that is, the d-axis current command value IdTout* is greater on the negative side than the d-axis current command value IdTref*, the program shifts to step S6. Then, the electronic control device 10 sets a d-axis current command value IdTout* for a d-axis current command value Id* that is output to the current control unit 12. The series of processing thus once ends.

Next, actions of the present embodiment will be described with reference to Fig. 5 to Fig. 7.

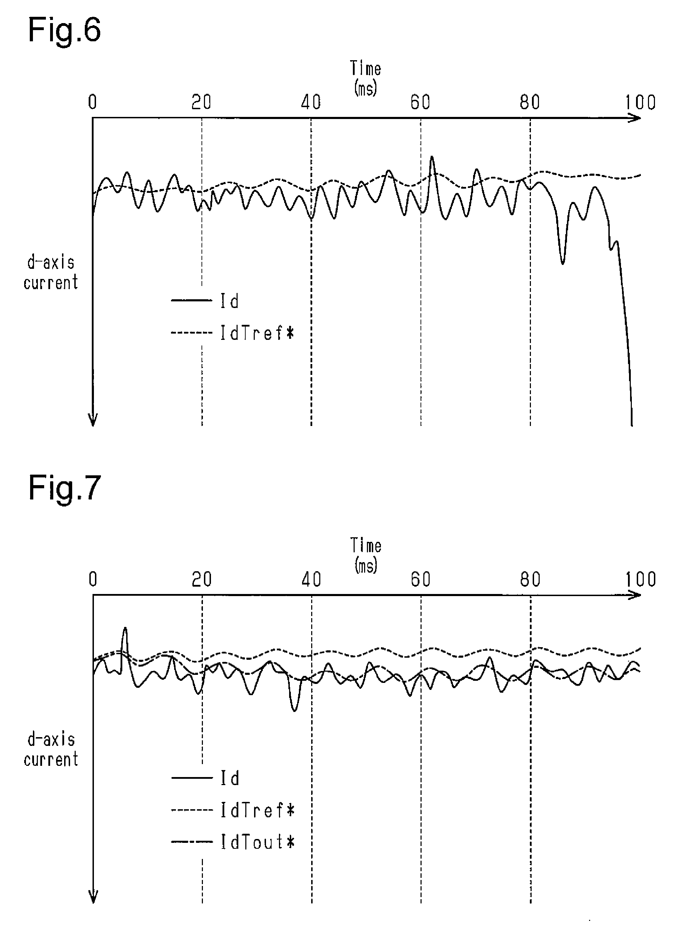

In Fig. 6, a transition of the d-axis current command value Id* (IdTref*) in conventional motor control is shown by a broken line, and a transition of the actual d-axis current value Id is shown by a solid line. In Fig. 7, a transition of the d-axis current command value IdTref* in motor control of the present embodiment is shown by a broken line, and a transition of the d-axis current command value IdTout* is shown by an alternate long and short dashed line. Also, a transition of the actual d-axis current value Id is shown by a solid line. The horizontal axis of Fig. 6 and Fig. 7 represents the elapsed time (ms) since the torque command value T* was suddenly inverted from a positive value to a negative value.

For example, there is a case where the torque of the motor 1 and/or the rotation direction of the drive wheels that is controlled during high-speed traveling of a vehicle suddenly changes and an external load acting on the output shaft of the motor 1 suddenly changes. The motor 1 reaches a regenerative state at this time, and the regenerative voltage Vmot of the motor 1 may excessively rise as shown by a dashed line in Fig. 5 to become higher than an upper limit value of the voltage Vinv of the inverter 2 shown by an alternate long and short dashed line in Fig. 5. As a result, in conventional motor control, when the d-axis current command value IdTref* is set as shown by the broken line in Fig. 6, an excessively large regenerative current may flow from the motor 1 to the inverter 2 as shown by the solid line in Fig. 6. Fig. 6 shows by the solid line a state of the d-axis current Id suddenly increasing on the negative side, but similarly, the q-axis current Iq also suddenly increases.

In contrast thereto, according to the present embodiment, when the motor 1 has reached a regenerative state and the d-axis current command value IdTout* based on the output torque Tout of the motor 1 has become greater on the negative side than the d-axis current command value IdTref* based on the torque command value T*, the inverter 2 is controlled according to the d-axis current command value IdTout* based on the output torque Tout. Therefore, such an excessive rise in the regenerative voltage Vmot as shown by the solid line in Fig. 5 is suppressed. As a result, as shown by the solid line in Fig. 7, flow of an excessively large regenerative current from the motor 1 to the inverter 2 is suppressed.

On the other hand, even during regeneration of the motor 1, the d-axis current command value IdTout* based on the output torque Tout of the motor 1 does not sometimes become greater on the negative side than the d-axis current command value IdTref* based on the torque command value T*. In such a case, it is determined that there is no possible excessive rise in regenerative voltage of the motor 1, and the inverter 2 is controlled according to the d-axis current command value IdTref* based on the torque command value T*. Therefore, regenerative current can be caused to flow from the motor 1 to the inverter 2 at an appropriate value.

By the motor control device described above, the following effects can be obtained.

(1) The electronic control device 10 includes maps that respectively define the relationship of the battery voltage Vb, the motor rotation speed ωe, and the torque value T of the motor 1 with a d-axis current command value Id* or a q-axis current command value Iq*. The electronic control device 10 derives a d-axis current command value Id* and a q-axis current command value Iq* based on the torque command value T* with reference to the maps. The electronic control device 10 controls the inverter 2 such that a current corresponding to the d-axis current command value Id* and the q-axis current command value Iq* flows to the motor 1. Also, during regeneration of the motor 1, the electronic control device 10, with reference to the map, derives a d-axis current command value IdTref* based on the torque command value T*, and derives a d-axis current command value IdTout* based on the output torque Tout. The electronic control device 10, when the d-axis current command value IdTout* is greater on the negative side than the d-axis current command value IdTref*, controls the inverter 2 according to the d-axis current command value IdTout*. According to this arrangement, regenerative energy can be appropriately recovered, while flow of an excessively large regenerative current from the motor 1 to the inverter 2 can be suppressed.

(2) The motor rotation speed ωe has a correlation with the rotation direction of the motor 1, and the actual q-axis current value Iq has a correlation with the output torque Tout of the motor 1. Therefore, the electronic control device 10 can accurately determine whether the motor 1 is in a regenerative state based on the actual q-axis current value Iq and the motor rotation speed ωe.

The above-described embodiment may be modified as follows.

The present invention is not limited to the arrangement that respectively derives a d-axis current command value IdTref* based on the torque command value T* and a d-axis current command value IdTout* based on the output torque Tout with reference to the same map. That is, it suffices to set a d-axis current command value greater on the negative side than the d-axis current command value IdTref* based on the torque command value T* under a situation where the output torque Tout excessively increases or decreases relative to the torque command value T* during regeneration of the motor 1, and control the inverter 2 according to the set d-axis current command value. That is, it suffices to set a value lower by a predetermined value than the d-axis current command value IdTref* based on the torque command value T* as a d-axis current command value. Also, when an absolute value |Tout| of the output torque Tout and an absolute value |T*| of the torque command value T* are compared with each other during regeneration of the motor 1 and the absolute value |Tout| is greater than the absolute value |T*|, it suffices to determine to be under the foregoing situation if other conditions are the same.

The present invention has been applied to a control device for an AC motor that drives drive wheels of an electric vehicle, but may be applied to a hybrid vehicle including an internal combustion engine and an AD motor.

The present invention may be applied to a control device for a motor that is not mounted in a vehicle. Also, the present invention may be applied to a control device that controls an AC motor other than a permanent magnet synchronous motor.

## Claims

1.   A motor control device which derives a d-axis current command value and q-axis current command value, based on a torque command value, and controls an inverter such that current of a value corresponding to the d-axis current command value and q-axis current command value flows to a motor, wherein when an absolute value of an output torque of the motor is greater than an absolute value of the torque command value during regeneration of the motor, a value greater on a negative side than the d-axis current command value based on the torque command value is set as a d-axis current command value, and the inverter is controlled according to the set d-axis current command value.

2.   The motor control device according to claim 1, wherein when a d-axis current command value based on an output torque of the motor is greater on a negative side than the d-axis current command value based on the torque command value during regeneration of the motor, the inverter is controlled according to the d-axis current command value based on the output torque of the motor.

3.   The motor control device according to claim 2, comprising a map that defines a relationship of a battery voltage, a motor rotation speed, and a torque value of the motor with a d-axis current command value, wherein the d-axis current command value based on the torque command value is derived with reference to the map, and during regeneration of the motor, the d-axis current command value based on the torque command value and the d-axis current command value based on the output torque of the motor are respectively derived with reference to the map.

4.   The motor control device according to any one of claims 1 to 3, wherein
whether the motor is in a regenerative state is determined based on an actual q-axis current value and a motor rotation speed.

# Fig.1

EP 2 869 460 A1

# Fig.2

Regenerative
state

Powering
state

Iq

Reverse rotation
Positive torque

Forward rotation
Positive torque

Powering
state

ωe

Regenerative
state

Reverse rotation
Negative torque

Forward rotation
Negative torque

## Fig.3(a)

## Fig.3(b)

**Fig.4**

```
        ┌─────────────────────────────┐
        │  d-axis current command value│
        │      setting processing      │
        └─────────────────────────────┘
                      │
                      ▼
┌─────────────────────────────────────────────┐
│ Derive d-axis current command value IdTref*  │ ～S1
│ based on torque command value T* with reference to map. │
└─────────────────────────────────────────────┘
                      │
                      ▼
              ╱───────────────╲        S2
           ╱         Is          ╲
          ⟨  motor in regenerative state ⟩────── NO ──────┐
           ╲          ?          ╱                         │
              ╲───────────────╱                            │
                      │ YES                                │
                      ▼                                    │
┌─────────────────────────────────────────────┐           │
│ Derive d-axis current command value IdTout*  │ ～S4      │
│ based on output torque Tout with reference to map. │     │
└─────────────────────────────────────────────┘           │
                      │                                    │
                      ▼           S5                       │
              ╱───────────────╲                            │
           ╱                     ╲                         │
          ⟨   IdTout*<IdTref*?    ⟩────── NO ──────────┐   │
           ╲                     ╱                      │   │
              ╲───────────────╱                        │   │
                      │ YES                             │   │
                      ▼          ～S6          ～S3      │   │
        ┌──────────────────────┐   ┌──────────────────────┐ │
        │     Id*←IdTout*       │   │     Id*←IdTref*       │◄┘
        └──────────────────────┘   └──────────────────────┘
                      │◄──────────────────────────┘
                      ▼
              ┌──────────────┐
              │     End      │
              └──────────────┘
```

**Fig.5**

## Fig.6

## Fig.7

## EP 2 869 460 A1

### INTERNATIONAL SEARCH REPORT

International application No.

PCT/JP2013/065663

**A. CLASSIFICATION OF SUBJECT MATTER**
*H02P21/00*(2006.01)i, *H02P27/04*(2006.01)i

According to International Patent Classification (IPC) or to both national classification and IPC

**B. FIELDS SEARCHED**

Minimum documentation searched (classification system followed by classification symbols)
H02P21/00, H02P27/04

Documentation searched other than minimum documentation to the extent that such documents are included in the fields searched
Jitsuyo Shinan Koho          1922-1996     Jitsuyo Shinan Toroku Koho    1996-2013
Kokai Jitsuyo Shinan Koho    1971-2013     Toroku Jitsuyo Shinan Koho    1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 8-266099 A  (Matsushita Electric Industrial Co., Ltd.),<br>11 October 1996 (11.10.1996),<br>paragraphs [0091], [0173] to [0176], [0198];<br>fig. 1, 8<br>& US 5652495 A | 1<br>4<br>2,3 |
| Y<br>A | JP 2008-99472 A  (Yaskawa Electric Corp.),<br>24 April 2008 (24.04.2008),<br>paragraph [0008]<br>(Family: none) | 4<br>2,3 |
| A | JP 2011-50183 A  (Sanyo Electric Co., Ltd.),<br>10 March 2011 (10.03.2011),<br>entire text; all drawings<br>(Family: none) | 2,3 |

| ☒ | Further documents are listed in the continuation of Box C. | ☐ | See patent family annex. |
|---|---|---|---|

\* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    21 August, 2013 (21.08.13) | Date of mailing of the international search report<br>    03 September, 2013 (03.09.13) |
|---|---|
| Name and mailing address of the ISA/<br>    Japanese Patent Office | Authorized officer |
| Facsimile No. | Telephone No. |

Form PCT/ISA/210 (second sheet) (July 2009)

13

**INTERNATIONAL SEARCH REPORT**

| International application No. |
| --- |
| PCT/JP2013/065663 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2001-95300 A  (Hitachi, Ltd.), 06 April 2001 (06.04.2001), entire text; all drawings (Family: none) | 2,3 |

Form PCT/ISA/210 (continuation of second sheet) (July 2009)

**EP 2 869 460 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001095300 A